(19) Europäisches Patentamt
European Patent Office
Office européen des brevets

(11) **EP 4 712 180 A1**

(12) **EUROPEAN PATENT APPLICATION**
published in accordance with Art. 153(4) EPC

(43) Date of publication:
**18.03.2026 Bulletin 2026/12**

(21) Application number: **24856754.7**

(22) Date of filing: **16.08.2024**

(51) International Patent Classification (IPC):
**H01M 10/04** $^{(2006.01)}$    **H01M 50/538** $^{(2021.01)}$
**H01M 50/188** $^{(2021.01)}$    **H01M 50/167** $^{(2021.01)}$
**H01M 50/567** $^{(2021.01)}$    **H01M 50/213** $^{(2021.01)}$
**H01M 50/249** $^{(2021.01)}$

(52) Cooperative Patent Classification (CPC):
**H01M 10/04; H01M 50/167; H01M 50/188;**
**H01M 50/213; H01M 50/249; H01M 50/538;**
**H01M 50/567;** Y02E 60/10; Y02P 70/50

(86) International application number:
**PCT/KR2024/012226**

(87) International publication number:
**WO 2025/042142 (27.02.2025 Gazette 2025/09)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.08.2023  KR 20230108388**
**13.08.2024  KR 20240108559**

(71) Applicant: **LG Energy Solution, Ltd.**
**Seoul 07335 (KR)**

(72) Inventors:
• **LEE, Myung-An**
**Daejeon 34122 (KR)**
• **PARK, Min-Gu**
**Daejeon 34122 (KR)**
• **SHIN, Hang-Soo**
**Daejeon 34122 (KR)**
• **LEE, Hye-Jin**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRODE ASSEMBLY, CYLINDRICAL BATTERY, AND BATTERY PACK AND VEHICLE COMPRISING SAME**

(57) Disclosed is an electrode assembly, a cylindrical battery, a battery pack and a vehicle. The electrode assembly has a structure in which a first electrode, a second electrode, and a separator interposed therebetween are wound. An outermost coated portion is the coated portion of the first electrode. A winding end of the separator extends further from the winding end of the coated portion of the first electrode. A fixing member is attached to the winding end of the separator along the axial direction from a point spaced apart from the axial end of the separator. When the winding end corner of the separator is folded as much as possible with the axial end of the fixing member acting as a folding bias point so that its outer surface faces the outer circumference, the winding end corner of the coated portion of the first electrode is not exposed to the outside.

FIG. 8

**Description**

TECHNICAL FIELD

The present application claims priority to Korean Patent Application No. 10-2023-0108388 filed on August 18, 2023, and Korean Patent Application No. 10-2024-0108559 filed on August 13, 2024, in the Republic of Korea, the disclosures of which are incorporated herein by reference.

The present disclosure relates to an electrode assembly, a cylindrical battery, and a battery pack and a vehicle including the same.

BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no by-products are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery, namely a unit battery, has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of unit secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing (can) to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 (diameter: 18 mm, height: 65 mm) or a form factor 2170 (diameter: 21 mm, height: 70 mm), resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

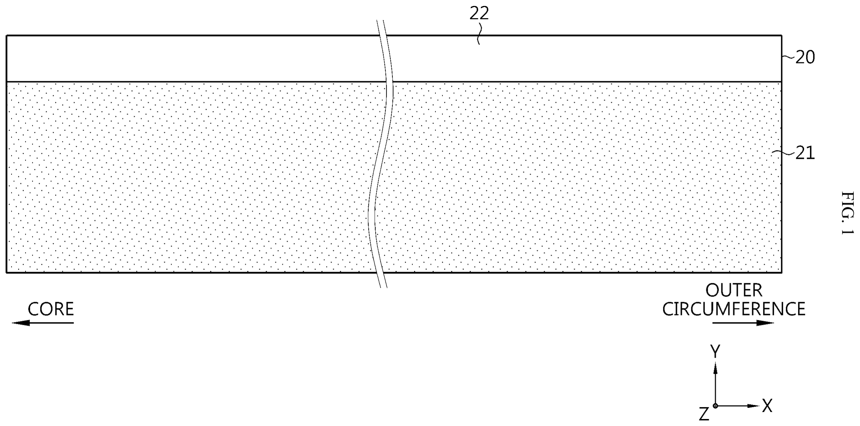

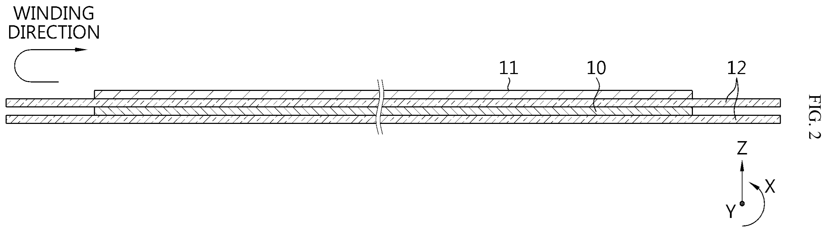

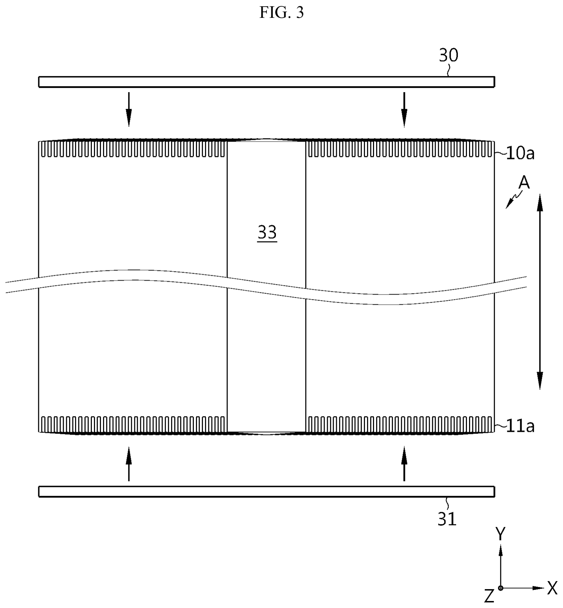

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collector to a bending surface area of an uncoated portion.

Referring to FIGS. 1 to 3, A positive electrode 10 and a negative electrode 11 include a sheet-shaped current collector 20 having a pair of short sides and a pair of long sides, and a coated portion 21 formed by an active material layer coated on a surface of the current collector 20. In addition, the positive electrode 10 and the negative electrode 11 include an uncoated portion 22 on one long side along a winding direction X.

An electrode assembly A is manufactured by sequentially stacking the positive electrode 10 and the negative electrode 11 together with two sheets of separators 12 as shown in FIG. 2 and then winding them in one direction X. The stacking order of the positive electrode 10 and the negative electrode 11 may be opposite to that shown in the drawings. The uncoated portions of the positive electrode 10 and the negative electrode 11 are arranged in opposite directions based on the winding axis direction of the electrode assembly A and extends and exposed to the outside of the separator 12.

After the winding process, the uncoated portion 10a of the positive electrode 10 and the uncoated portion 11a of the negative electrode 11 are bent toward the core. For smooth folding, the uncoated portion 10a of the positive electrode 10 and the uncoated portion 11a of the negative electrode 11 may be divided into a plurality of independently foldable segments. Thereafter, current collectors 30, 31 are coupled to the folded uncoated portions 10a, 11a, respectively, by welding.

An electrode tab is not separately coupled to the positive electrode uncoated portion 10a and the negative electrode uncoated portion 11a, the current collectors 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

Meanwhile, the outer circumference of electrode assembly A is wrapped by a separator to prevent the coated portion of the outermost electrode from being exposed. However, during the processes of unloading the electrode assembly A from a winding device, transporting the electrode assembly A between the assembly processes and inserting the electrode assembly A into a battery housing, the winding end corner of the separator is folded outward, so that the winding end (especially, the corner) of the outermost coated portion may be exposed to the outside.

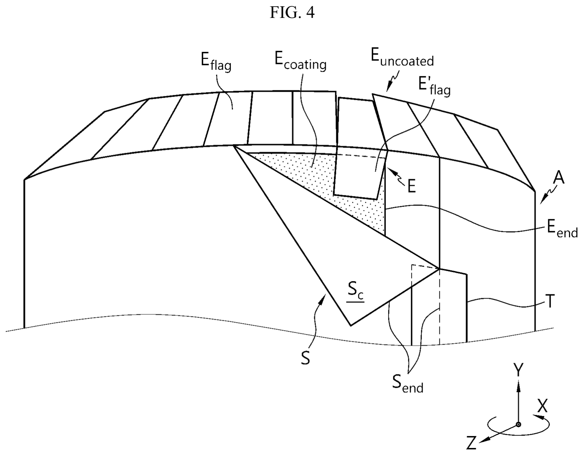

FIG. 4 is a partial perspective view showing a state in which the coated portion ($E_{coating}$) of the outermost electrode E is exposed as the winding end corner ($S_c$) of the separator S wound around the outer circumference of the electrode assembly A according to the prior art is folded outward.

Referring to FIG. 4, the outermost electrode E of the electrode assembly A is wrapped by the separator S. This is to prevent the electrode E from being exposed to the outside. Therefore, the winding end ($S_{end}$) of the separator S extends further in the winding direction than the winding end ($E_{end}$) of the electrode E. As a result, the coated portion ($E_{coating}$) of the electrode E is not exposed to the outside.

The winding end ($S_{end}$) of the separator S is fixed by attaching a fixing member T to the winding end ($S_{end}$) of the separator S. The fixing member T prevents the winding state of the electrode assembly A from being released. An adhesive tape is mainly used as the fixing member T. However, in the process of handling the electrode assembly A to assemble the cylindrical battery, the winding end corner ($S_c$) of the separator S may be folded outward with the end of the fixing member T acting as a folding bias point. In this case, the outer surface of the winding end corner ($S_c$) faces the outer circumference of the electrode assembly A. In addition, if the distance between the winding end ($S_{end}$) of the separator S and the winding end ($E_{end}$) of the electrode E is not sufficient, the coated portion ($E_{coatig}$) of the electrode E, which has been covered by the separator S, is exposed to the outside.

If the coated portion ($E_{coatig}$) of the electrode E is exposed, when vibration or impact is applied to the electrode assembly A, active material particles fall off from the coated portion ($E_{coatig}$), which increases the risk of low voltage. In addition, the uncoated portion ($E_{uncoated}$) having the opposite polarity to the electrode E is exposed on the upper portion of the electrode assembly A. In addition, the uncoated portion ($E_{uncoated}$) may be divided into a plurality of segments ($E_{flag}$) for smooth folding. In this case, when the winding end corner ($S_c$) of the separator S is folded, the segment ($E'_{flag}$) near the coated portion ($E_{coatig}$) exposed to the outside may also be folded outward together with the winding end corner ($S_c$) of the separator S, and the outer surface of the segment ($E'_{flag}$) may come into contact with the exposed surface of the coated portion ($E_{coatig}$). A cylindrical battery manufactured using the electrode assembly A in this state may ignite or explode during the activation process or the subsequent charge/discharge cycle. This is because the internal temperature and pressure of the cylindrical battery rapidly rise as an internal short circuit occurs at the point where the coated portion ($E_{coatig}$) and the segment ($E'_{flag}$) come into contact with each other.

To solve the above problem, the distance between the winding end ($S_{end}$) of the separator S and the winding end ($E_{end}$) of the electrode E may be significantly increased by a safety margin or more, or the outer circumference of the electrode assembly A may be additionally wound with the separator S by one or more turns. However, this method results in the increase of the amount of the separator S used, which increases the manufacturing cost of the cylindrical battery. In addition, the distance between the end in the axial direction Y of the separator S and the axial end of the coated portion ($E_{coating}$) may be increased. However, this method reduces the height ratio of the coated portion ($E_{coating}$) in comparison to the total height of the electrode assembly A, which reduces the energy density of the cylindrical battery.

DISCLOSURE

Technical Problem

The present disclosure is designed to solve the problems of the related art, and therefore the present disclosure is directed to providing an electrode assembly with an improved structure in which an attachment position of a fixing member to a winding end of a separator is optimally designed so that, in an electrode assembly having a tab-less structure on at least one of a positive electrode and a negative electrode, a coated portion of an outermost electrode covered by the separator is not exposed to the outside even when a winding end corner of the separator is folded outward.

The present disclosure is also directed to providing a battery including the electrode assembly having an improved structure, a battery pack including the battery, and a vehicle including the battery pack.

The technical objects to be solved by the present disclosure are not limited to the above, and other objects not mentioned herein will be clearly understood by those skilled in the art from the following disclosure.

Technical Solution

First, the inventors of the present discloser have confirmed through numerous trial and errors that, in an electrode assembly having a tab-less structure on at least one of positive and negative electrodes, a minimum value of a folding angle exists when a winding end corner of the separator is folded outward using the end of the fixing member as a folding bias point.

In the present disclosure, the tab-less structure means a structure in which the uncoated portion itself provided at the long side end along the winding direction of the electrode is used as a tab without separately attaching a tab to the uncoated portion of the electrode. The uncoated portion may be divided into at least a plurality of segments, or alternatively, the uncoated portion may not be divided.

In addition, the inventors of the present discloser have confirmed through continuous research and development that, by optimally designing the attachment position of the fixing member using the distance between the winding end of the separator and the winding end of the outermost coated portion in the winding direction, the distance between the end of the separator and the end of the outermost coated portion with respect to the axial direction of the electrode assembly, and the minimum folding angle of the winding end corner of the separator, it is possible to fundamentally prevent the coated portion of the outermost electrode from being exposed even when the winding end corner of the separator is folded outward as much as possible using the end of the fixing member as a folding bias point.

In one aspect of the present disclosure, there may be provided an electrode assembly in which a first electrode and a second electrode having a short side and a long side and including a coated portion and an uncoated portion along a long side direction, and a separator interposed therebetween are wound around one axis to define a core and an outer circumference.

In the electrode assembly, an outermost coated portion may be the coated portion of the first electrode. A winding end of the coated portion of the first electrode may extend further along a winding direction than a winding end of the coated portion of the second electrode.

A winding end of the separator may further extend from the winding end of the coated portion of the first electrode by a first length along the winding direction.

A fixing member may be attached to the winding end of the separator along the axial direction from a point spaced apart from an axial end of the separator by a second length.

The fixing member may be an adhesive tape having an adhesive layer on one surface.

An axial end of the coated portion of the first electrode may be spaced inwardly from the axial end of the separator by a third length.

When a winding end corner of the separator is folded as much as possible with an axial end of the fixing member acting as a folding bias point so that an outer surface of the winding end corner faces the outer circumference, a winding end corner of the coated portion of the first electrode may not be exposed to an outside.

A fold line generated when the winding end corner of the separator is folded may not overlap with the winding end corner of the coated portion of the first electrode.

When the winding end corner of the separator is folded outward as much as possible using an arbitrary point of the winding end of the separator as a folding bias point, a surface portion corresponding to a portion exposed to the outside may be approximated as a right triangle and a minimum value of an angle formed by one side of the right triangle along the winding direction and the fold line may be defined as a minimum folding angle ($\theta_{min}$).

The fixing member may be attached to the winding end of the separator so that a second length corresponding to a distance between the axial end of the fixing member and the axial end of the separator satisfies a following formula.

$$\text{second length} < \text{third length} + \text{first length}*\tan(\theta_{min})$$

The minimum folding angle ($\theta_{min}$) may decrease as a diameter of the electrode assembly increases.

The minimum folding angle ($\theta_{min}$) may decrease exponentially as the diameter of the electrode assembly increases.

A length of one side of the right triangle along the winding direction may be longer than a length of the other side of the right triangle along the axial direction.

A diameter of the electrode assembly may be 13 mm to 103 mm, and the minimum folding angle ($\theta_{min}$) may be 5 degrees to 60 degrees.

The first length may be 1 mm to 120 mm.

The third length may be 0.1 mm to 3.0 mm.

The separator may include an inner separator interposed between the first electrode and the second electrode, and an outer separator arranged at an outer side of the first electrode and winding a stack of the first electrode, the inner separator, and the second electrode.

The outer separator may be longer than the inner separator.

A separator extending from the winding end of the coated portion of the first electrode by the first length along the winding direction may be the outer separator.

The uncoated portion of the first electrode may include a plurality of segments divided by a cut groove formed along the winding direction. The plurality of segments of the first electrode may protrude outwardly from the axial end of the separator along a direction away from the axial end of the coated portion of the first electrode. The plurality of segments of the first electrode may be bent toward the core to form a first bending surface area.

Alternatively, the uncoated portion of the first electrode may not be divided into a plurality of segments. The first bending surface area may be formed by bending the uncoated portion of the first electrode that does not include a segment structure.

The uncoated portion of the second electrode may include a plurality of segments divided by a cut groove formed along the winding direction. The plurality of segments of the second electrode may protrude outwardly from the axial end of the separator adjacent to the axial end of the coated portion of the first electrode. The plurality of segments of the second electrode may be bent toward the core to form a second bending surface area.

Alternatively, the uncoated portion of the second electrode may not be divided into a plurality of segments. The second bending surface area may be formed by bending the uncoated portion of the second electrode that does not include a segment structure.

In another aspect of the present disclosure, there may be provided a cylindrical battery comprising an electrode assembly having at least one of the above-described features; a battery housing having an open end and a closed end and configured to accommodate the electrode assembly through the open end, the battery housing being electrically connected to the first electrode of the electrode assembly; a sealing body configured to seal the open end of the battery housing; and a terminal electrically connected to the second electrode of the electrode assembly and having a surface exposed to an outside of the battery housing.

The cylindrical battery may further comprise a first current collecting plate configured to electrically connect the uncoated portion of the first electrode and the battery housing.

The first current collecting plate may be coupled to a sidewall of the battery housing. The first current collecting plate and the sidewall of the battery housing may be coupled through welding.

The sealing body may include a cap plate configured to cover the open end of the battery housing, and a gasket interposed between an edge of the cap plate and the open end.

An edge of the first current collecting plate may be interposed between the gasket and a sidewall of the battery housing.

The battery housing may include a beading portion formed by pressing inward an outer circumference near the open end, and an edge of the first current collecting plate may be in contact with the beading portion.

The terminal may be installed in a perforation hole formed in the closed end of the battery housing to be insulated from the battery housing.

The terminal may include a terminal exposing portion exposed through an outer surface of the closed end, and a terminal insert portion extending from the terminal exposing portion and inserted into the battery housing through the perforation hole.

A lower edge of the terminal insert portion may be riveted toward an inner surface of the closed end.

The cylindrical battery may further comprise a second current collecting plate configured to electrically connect the uncoated portion of the second electrode and a lower end of the terminal insert portion.

The sealing body may include a cap plate that seals the open end of the battery housing, and the terminal may be the cap plate.

The sealing body may include a cap plate that covers the open end of the battery housing, an edge of the cap plate may be coupled to the open end, and at least a part of the first current collecting plate may be coupled to the cap plate.

The sealing body may include a cap plate configured to cover the open end of the battery housing. An edge of the cap plate may be coupled to the open end. At least a part of an inner side of the edge of the cap plate may be electrically coupled to the electrode assembly.

Preferably, at least a part of the inner area of the edge of the cap plate may be welded to the first bending surface area of the first electrode.

In still another aspect of the present disclosure, there is also provided a battery pack comprising a plurality of cylindrical batteries described above.

In still another aspect of the present disclosure, there is also provided a vehicle comprising the battery pack.

Advantageous Effects

According to the present disclosure, by optimally designing the attachment position of the fixing member using the distance between the winding end of the separator and the winding end of the outermost coated portion in the winding direction, the distance between the end of the separator and the end of the outermost coated portion in the axial direction of the electrode assembly, and the minimum folding angle of the winding end corner of the separator, it is possible to fundamentally prevent the outermost coated portion from being exposed even when the winding end corner of the separator is folded outward as much as possible using the end of the fixing member as a folding bias point.

According to another aspect of the present disclosure, by optimally designing the attachment position of the fixing member, the distance between the winding end of the separator and the winding end of the outermost coated portion in the winding direction may be reduced compared to the prior art, thereby reducing the amount of the separator used during the winding process of the electrode assembly.

According to still another aspect of the present disclosure, it is possible to provide a cylindrical battery having improved safety, and a battery pack and a vehicle including the same by fundamentally preventing exposure of the outermost coated portion that otherwise might occur while handling the electrode assembly during assembling the cylindrical battery.

In addition, the present disclosure may have several other effects, and such effects will be described in each embodiment, or any description that can be easily inferred by a person skilled in the art will be omitted for an effect.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a plan view showing a structure of an electrode used for manufacturing a conventional tab-less cylindrical battery.

FIG. 2 is a diagram showing an electrode winding process of the conventional tab-less cylindrical battery.

FIG. 3 is a diagram showing a process of welding a current collector to a bending surface area of an uncoated portion in the conventional tab-less cylindrical battery.

FIG. 4 is a partial perspective view showing a state in which a coated portion ($E_{coating}$) of an outermost electrode E is exposed as a winding end corner ($S_c$) of a separator S wound around the outer circumference of the electrode assembly A according to the prior art is folded outward.

FIG. 5 is a plan view showing a laminated state of an electrode and a separator before an electrode assembly according to an embodiment of the present disclosure is wound.

FIG. 6 is a cross-sectional view showing the laminated state of the electrode and the separator before the electrode assembly according to an embodiment of the present disclosure is wound.

FIG. 7 is a cross-sectional view showing the electrode assembly according to an embodiment of the present disclosure, taken perpendicular to an axial direction.

FIG. 8 is a conceptual diagram for explaining an optimal design for an attachment position of a fixing member according to an embodiment of the present disclosure.

FIG. 9 is a graph of an exponential function defining the relationship between a diameter (d) of the electrode assembly and a minimum folding angle ($\theta_{min}$) obtained through function fitting according to an embodiment of the present disclosure.

FIG. 10 is a plan view showing the relative positions of a coated portion of a first electrode, a separator, and a fixing member when the fixing member is attached to a design position according to an embodiment of the present disclosure.

FIG. 11 is a partial perspective view of the electrode assembly showing that when the fixing member is attached to a design position according to an embodiment of the present disclosure, a segment of a second electrode is prevented from contacting the coated portion of the first electrode even when folded outward.

FIG. 12 is a cross-sectional view showing a cylindrical battery according to an embodiment of the present disclosure, taken along the winding axis direction Y.

FIG. 13 is a cross-sectional view showing a cylindrical battery according to another embodiment of the present disclosure, taken along the winding axis direction Y.

FIG. 14 is a diagram schematically showing a battery pack according to an embodiment of the present disclosure.

FIG. 15 is a diagram schematically showing a vehicle including the battery pack according to an embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Also, to aid understanding of the present disclosure, the attached drawings are not drawn to scale and the dimensions of some components may be exaggerated. In addition, the same reference symbols may be assigned to the same components in different embodiments.

Stating that two objects of comparison are 'the same' means that they are 'substantially the same'. Therefore, the term 'substantially the same' may include a deviation that is considered low in the art, for example, a deviation of less than 10%. Also, uniformity of a parameter in a region may mean that the parameter is uniform from an average perspective in the corresponding region.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

For convenience of description, a direction that goes along a lengthwise direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radial direction. Among them, in particular, the direction that gets closer to the winding axis is referred to as a centripetal direction, and the direction that faces away from the winding axis is referred to as a centrifugal direction.

First, an electrode assembly according to an embodiment of the present disclosure is described.

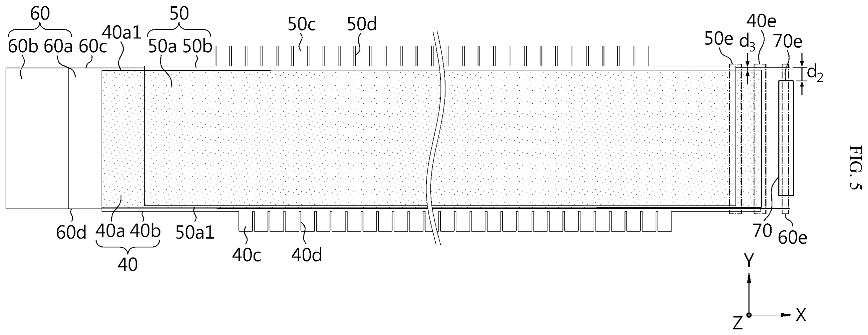

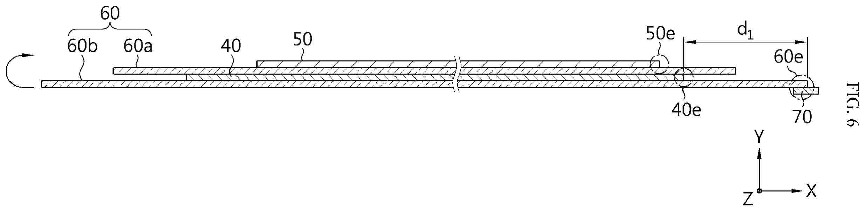

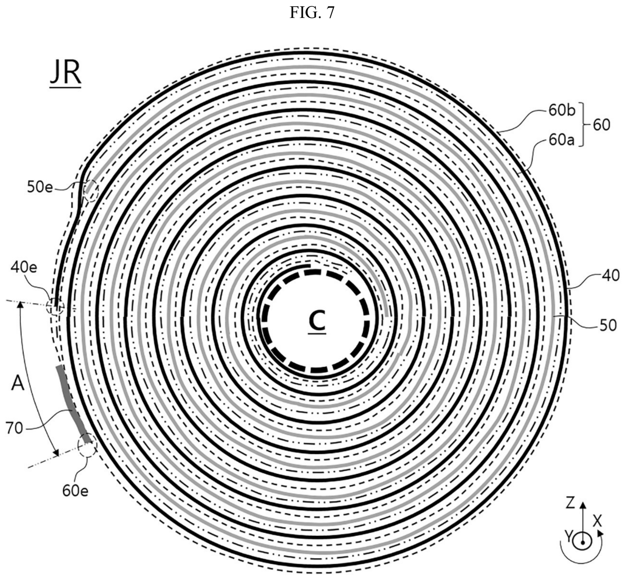

FIGS. 5 and 6 are a plan view and a cross-sectional view showing a laminated state of an electrode and a separator before an electrode assembly according to an embodiment of the present disclosure is wound, respectively. FIG. 7 is a cross-sectional view showing the electrode assembly according to an embodiment of the present disclosure, taken perpendicular to an axial direction.

Referring to FIGS. 5 to 7, an electrode assembly JR according to an embodiment of the present disclosure may have a structure in which a first electrode 40 and a second electrode 50 having a sheet shape and a separator 60 interposed therebetween are wound in one direction. The first electrode 40 and the second electrode 50 may be a negative electrode and a positive electrode, respectively, or vice versa.

The separator 60 may include an inner separator 60a interposed between the first electrode 40 and the second electrode 50 and an outer separator 60b arranged on the outer side of the first electrode 40 and winding the stack of the first electrode 40, the inner separator 60a, and the second electrode 50. The outer separator 60b is longer than the inner separator 60a. Accordingly, both ends of the outer separator 60b along the winding direction X extend further outward than both ends of the inner separator 60a along the winding direction X.

The first electrode 40 and the second electrode 50 may have a pair of short sides and a pair of long sides. The pair of long sides extend between the pair of short sides. The pair of short sides extend along the axial direction Y of the electrode assembly JR. The pair of long sides extend along the winding direction X of the electrode assembly JR.

The first electrode 40 includes a coated portion 40a and an uncoated portion 40b along the long side direction. Similarly, the second electrode 50 includes a coated portion 50a and an uncoated portion 50b along the long side direction. The coated portions 40a and 50a may be active material coating layers. The uncoated portions 40b and 50b may be current collectors on which active material is coated. The current collector may be a metal foil. The coated portions 40a and 50a may be provided on both surfaces of the current collector. The uncoated portion 40b of the first electrode 40 extends in the winding direction X along the long side end of the first electrode 40. The uncoated portion 50b of the second electrode 50 extends in the winding direction X along the long side end of the second electrode 50.

Optionally, the boundary between the coated portion 40a and the uncoated portion 40b of the first electrode 40 may be covered by an insulating coating layer (not shown). Similarly, the boundary between the coated portion 50a and the uncoated portion 50b of the second electrode 50 may be covered by an insulating coating layer. The insulating coating layer may include a resin and an inorganic filler.

The uncoated portion 40b of the first electrode 40 may include a plurality of segments 40c divided by a cut groove 40d formed along the winding direction X. The cut groove 40d may be formed by a laser notching process. The first electrode 40 may not include the segment 40c in an area adjacent to the core and the outer circumference of the electrode assembly JR. The plurality of segments 40c of the first electrode 40 may protrude outwardly from the end 60d in the axial direction Y of the separator 60 along a direction away from the end 40a1 in the axial direction Y of the coated portion 40a of the first electrode 40. The plurality of segments 40c of the first electrode 40 may be bent toward the core of the electrode assembly JR to form a first bending surface area.

The uncoated portion 50b of the second electrode 50 may include a plurality of segments 50c divided by a cut groove 50d formed along the winding direction X. The cut groove 50d may be formed by a laser notching process. The second electrode 50 may not include the segment 50c in an area adjacent to the core and the outer circumference of the electrode assembly JR. The plurality of segments 50c of the second electrode 50 may protrude outwardly from the end 60c in the axial direction Y of the separator 60 adjacent to the end 40a1 in the axial direction Y of the coated portion 40a of the first electrode 40. The plurality of segments 50c of the second electrode 50 may be bent toward the core of the electrode assembly JR to form a second bending surface area.

The width of the segments 40c, 50c roughly corresponds to the width of the lower end. The width of the segments 40c, 50c may be 1 mm to 11 mm. The width of the segment 61 may be constant or may increase stepwise or gradually from the core to the outer circumference.

The height of the segments 40c, 50c roughly corresponds to the shortest distance between the upper end and the lower end. The height of the segments 40c, 50c may be 2 mm to 10 mm. The height of the segments 40c, 50c may be constant or may increase stepwise or gradually from the core to the outer circumference.

The separation pitch P of the segments 40c, 50c corresponds to the distance between two points where a straight line passing through the lower end of the cut groove in the winding direction X intersects two straight lines extending from the side of the segments 40c, 50c at both sides of the cut groove. The separation pitch P of the segments 40c, 50c may be 0.05 mm to 1 mm. The separation pitch P of the segments 40c, 50c may be constant or may increase stepwise or gradually from the core to the outer circumference.

The shape of the segments 40c, 50c may have a geometric shape known in the art, such as a rectangle, a parallelogram, a trapezoid, a semicircle, a semi-ellipse or the like.

In the present disclosure, the uncoated portion 40b of the first electrode 40 may not be divided into a plurality of segments 40c by the cut groove 40d. Similarly, the uncoated portion 50b of the second electrode 50 may not be divided into a plurality of segments 50c by the cut groove 50d.

The outermost coated portion of the electrode assembly JR may be the coated portion 40a of the first electrode 40. The winding end 60e of the separator 60 may be extended from the winding end 40e of the coated portion 40a of the first electrode 40 by a first length ($d_1$) along the winding direction X.

The first length ($d_1$) may be appropriately set so that the coated portion 40a of the first electrode 40 is not exposed to the outside along the winding direction X. If the first length ($d_1$) is too small, the coated portion 40a may be exposed along the winding direction X due to the length tolerance of the electrode and the separator when winding the electrode assembly JR. If the first length ($d_1$) is too large, it causes unnecessary waste of the separator 60.

The first length ($d_1$) may be 1 mm or more, 5 mm or more, 10 mm or more, 15 mm or more, 20 mm or more, or 25 mm or more. The first length ($d_1$) may be 120 mm or less, 110 mm or less, 100 mm or less, 90 mm or less, 80 mm or less, 70 mm or less, 60 mm or less, 50 mm or less, or 40 mm or less. The upper and lower limits of the first length ($d_1$) may be selected from the above lower limit conditions and the above upper limit conditions. Preferably, the first length ($d_1$) may be 1 mm or more and 40 mm or less.

A fixing member 70 may be attached to the winding end 60e of the separator 60 along the axial direction Y from a point spaced apart from the axial end 60c of the separator 60 by a second length ($d_2$).

An important feature of the present disclosure is that the attachment position of the fixing member 70, i.e. the second length ($d_2$), is optimally designed so that the winding end corner of the coated portion 40a of the first electrode 40 is not exposed when the winding end corner ($S_c$) of the separator 60 is folded outward.

The end 40a1 in the axial direction Y of the coated portion 40a of the first electrode 40 may be spaced inwardly from the axial end 60c of the separator 60 by a third length ($d_3$).

The third length ($d_3$) may be appropriately set considering the meandering tolerance of the separator 60 when the electrode assembly JR is wound. If the third length ($d_3$) is too small, the coated portion 40a of the first electrode 40 may be exposed to the outside of the separator 60. If the third length ($d_3$) is too large, the ratio of the height of the coated portion 40a to the total height of the electrode assembly JR decreases, thereby lowering the energy density.

The third length ($d_3$) may be 0.1 mm or more, 0.5 mm or more, or 1 mm or more. The third length ($d_3$) may be 3 mm or less, 2.5 mm or less, 2.0 mm or less, or 1.5 mm or less. The upper and lower limits of the third length ($d_3$) may be selected from the above lower limit conditions and the upper above limit conditions. Preferably, the third length ($d_3$) may be 0.1 mm or more and 3 mm or less.

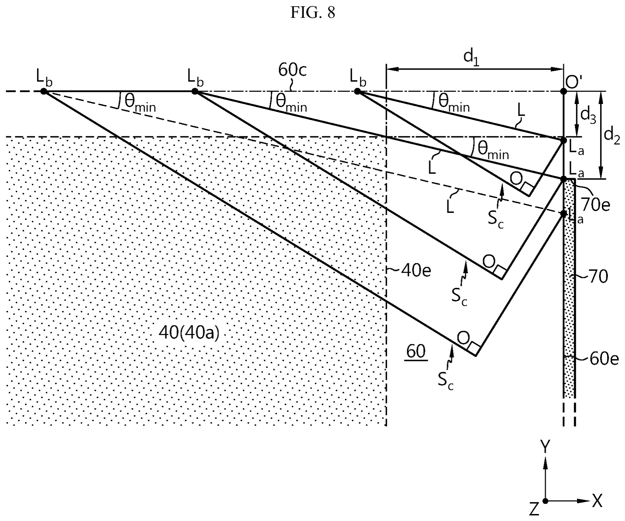

FIG. 8 is a conceptual diagram for explaining an optimal design for the attachment position of the fixing member 70 according to an embodiment of the present disclosure.

FIG 8 is an enlarged view showing the relative positions of the separator 60 and the first electrode 40 at a portion where the winding of the electrode assembly JR ends. The relative positions are shown based on the unwound state of the electrode assembly JR.

Referring to FIG. 8, a fixing member 70 may be attached to the winding end 60e of the separator 60 to prevent the winding state of the electrode assembly JR from being released.

The fixing member 70 may be an adhesive tape having an adhesive layer formed on one side.

While handling the electrode assembly JR, the winding end corner ($S_c$) of the separator 60 may be folded outward. If the winding end corner ($S_c$) is folded, the outer surface of the winding end corner ($S_c$) may come into contact with the outer circumference of the electrode assembly JR.

The winding end corner ($S_c$) in the folded state forms a right triangle $\triangle OL_aL_b$ with the fold line L as the hypotenuse. The first end ($L_a$) of the fold line L is located at the winding end 60e of the separator 60, and the second end ($L_b$) of the fold line L is located at the end in the axial direction Y of the separator 60.

The positions of the first end ($L_a$) and the second end ($L_b$) of the fold line L may change depending on the folding direction and folding strength of the winding end corner ($S_c$). The positions at which the first end ($L_a$) and the second end ($L_b$) may be located may be limited to a specific range depending on the position of the fixing member 70 and the diameter of the electrode assembly JR.

The first end ($L_a$) may move only to the end 70e in the axial direction Y of the fixing member 70 along the winding end 60e of the separator 60. The second end ($L_b$) may move in the opposite direction to the winding direction X depending on the folding direction and strength of the winding end corner ($S_c$) when the position of the first end ($L_a$) is fixed. The moving distance may be limited by the curvature of the outer circumference of the electrode assembly JR, namely the diameter of the electrode assembly JR. The first end ($L_a$) whose position is fixed becomes a folding bias point when the winding end corner ($S_c$) is folded. The folding bias point becomes a reference point for rotating the winding end corner ($S_c$) outward when the winding end corner ($S_c$) is folded.

The right triangle $\triangle OL_aL_b$ corresponding to the winding end corner ($S_c$) in the folded state is symmetrical with the right triangle $\triangle O'L_aL_b$ with respect to the fold line L. The right triangle $\triangle O'L_aL_b$ is a geometric figure that approximately corresponds to the surface portion exposed to the outside when the winding end corner ($S_c$) of the separator 60 is folded.

The folding angle ($\theta$) of the winding end corner ($S_c$) may be defined as the angle ($\theta$) formed by the fold line L and one side ($O'L_b$) along the winding direction X among sides of the right triangle $\triangle O'L_aL_S$.

The moving distance of the second end ($L_b$) of the fold line L may be limited depending on the diameter of the electrode assembly JR when the first end ($L_a$) is fixed and acts as a folding bias point. Therefore, the second end ($L_b$) may move to a position where the folding angle ($\theta$) decreases to the minimum folding angle ($\theta_{min}$) when the winding end corner ($S_c$) of the separator 60 is folded as outward as possible in a state in which the position of the first end ($L_a$) is fixed.

Since the first end ($L_a$) of the fold line L acts as a folding bias point by the fixing member 70, the length of one side ($O'L_b$) of the right triangle ($\triangle O'L_aL_b$) along the winding direction X is longer than the length of the other side ($O'L_a$) of the right triangle along the axial direction Y.

According to the experiment, as the diameter of the electrode assembly JR increases, the moving distance of the second end ($L_b$) increases and the minimum folding angle ($\theta_{min}$) tends to decrease. That is, the minimum folding angle ($\theta_{min}$) may decrease linearly or nonlinearly as the diameter of the electrode assembly JR increases.

When the diameter of the electrode assembly JR is 18 mm to 50 mm, the minimum folding angle ($\theta_{min}$) may be 5 degrees or more, 10 degrees or more, 15 degrees or more, 20 degrees or more, or 25 degrees or more. The minimum folding angle ($\theta_{min}$) may be 60 degrees or less, 55 degrees or less, 50 degrees or less, 45 degrees or less, 40 degrees or less, or 35 degrees or less. The upper and lower limits for the range of the minimum folding angle ($\theta_{min}$) may be selected from the above upper limit conditions and the above lower limit conditions. Preferably, the minimum folding angle ($\theta_{min}$) may be 20 degrees to 40 degrees.

FIG. 8 shows the position of the fold line L that form the minimum folding angle ($\theta_{min}$) with one side ($O'L_b$) of the right triangle when the winding end corner ($S_c$) of the separator 60 is folded outward as much as possible in a state in which the first end ($L_a$) of the fold line L is fixed at three different positions is indicated.

The minimum folding angle ($\theta_{min}$) may be determined by repeatedly performing an experiment to fold the winding end corner ($S_c$) of the separator 60 for the electrode assembly JR. The minimum folding angle ($\theta_{min}$) may be uniquely determined depending on the specifications of the electrode assembly JR. The minimum folding angle ($\theta_{min}$) is mainly affected by the diameter of the electrode assembly JR. The minimum folding angle ($\theta_{min}$) may also be additionally affected by the material and thickness of the separator 60. The minimum folding angle $(\theta_{min})$ may be determined as a minimum value of the folding angle $(\theta)$ when the winding end corner $(S_c)$ of the separator 60 is intentionally folded to the maximum at multiple points of the winding end 60e of the separator 60 using each point as a folding bias point. The multiple points of the winding end 60e of the separator 60 may be selected from points where the fixing member 70 is not attached.

In one example, when the winding end corner $(S_c)$ of the separator 60 is folded outward as much as possible in a state in which the first end $(L_a)$ of the fold line L is fixed to the first point from an upper side, the fold line L does not overlap the coated portion 40a of the first electrode 40. The condition that the first end $(L_a)$ of the fold line L is fixed to the first point corresponds to a preferred embodiment of the present disclosure. Accordingly, the fixing member 70 may be attached to the winding end 60e of the separator 60 so that the end 70e in the axial direction Y of the fixing member 70 is positioned at the first point. Then, even if the winding end corner $(S_c)$ of the separator 60 is folded as much as possible using the axial end 70e of the fixing member 70 as a folding bias point so that its outer surface comes into contact with the outer circumference of the electrode assembly JR, the coated portion 40a of the first electrode 40 is not exposed to the outside.

In another example, when the winding end corner $(S_c)$ of the separator 60 is folded outward as much as possible in a state in which the first end $(L_a)$ of the fold line L is fixed to the second point from an upper side, the fold line L exactly passes through the corner of the coated portion 40a of the first electrode 40. The condition that the first end $(L_a)$ of the fold line L is fixed to the second point corresponds to a boundary condition for a preferred embodiment of the present disclosure. Therefore, if the fixing member 70 is attached to the winding end 60e of the separator 60 so that the end 70e in the axial direction Y of the fixing member 70 is positioned at the second point, when the winding end corner $(S_c)$ of the separator 60 is folded as much as possible using the axial end 70e of the fixing member 70 as a folding bias point so that its outer surface comes into contact with the outer circumference of the electrode assembly JR, the corner of the coated portion 40a of the first electrode 40 is placed on the fold line L.

In still another example, when the winding end corner $(S_c)$ of the separator 60 is folded outward as much as possible in a state in which the first end $(L_a)$ of the fold line L is fixed at the third point from an upper side, the fold line L passes through the coated portion 40a of the first electrode 40. The condition that the first end $(L_a)$ of the fold line L is fixed at the third point corresponds to an undesirable comparative example. Therefore, if the fixing member 70 is attached to the winding end 60e of the separator 60 so that the end 70e in the axial direction Y of the fixing member 70 is positioned at the third point, when the winding end corner $(S_c)$ of the separator 60 is folded as much as possible using the axial end 70e of the fixing member 70 as a folding bias point so that its outer surface comes into contact with the outer circumference of the electrode assembly JR, the coated portion 40a of the first electrode 40 is exposed to the outside. Exposure of the coated portion 40a increases the risk of low voltage and causes internal short circuits as explained in the background section.

From the viewpoint of generalization, when the winding end corner $(S_c)$ is folded outward as much as possible using an arbitrary point of the winding end 60e of the separator 60 as a folding bias point, if a surface portion corresponding to the exposed portion is approximated as a right triangle $(\triangle O'L_aL_b)$ and the minimum value of the angle formed by one side $(O'L_b)$ of the right triangle along the winding direction X and the fold line L is defined as the minimum folding angle $(\theta_{min})$, it is preferable that the fixing member 70 is attached to the winding end 60e of the separator such that the second length $(d_2)$ corresponding to the distance between the end in the axial direction Y of the fixing member 70 and the axial end 60c of the separator 60 satisfies the following formula.

Formula:

$$\text{second length } (d_2) < \text{third length } (d_3) + \text{first length } (d_1) * \tan(\theta_{min})$$

In the above formula, the first length $(d_1)$, the third length $(d_3)$, and the minimum folding angle $(\theta_{min})$ are values determined in advance by the design conditions of the electrode assembly JR.

Hereinafter, embodiments that calculate a desirable attachment position of the fixing member 70 while adjusting the diameter of the electrode assembly JR differently will be specifically described. The separator 60 uses a composite separator in which a porous inorganic coating layer is formed on both surfaces of a substrate made of a polyethylene film widely used in the field of battery technology. The thickness of the substrate is 10 $\mu$m, and the thickness of the inorganic coating layer is 3 $\mu$m. The porous inorganic coating layer contains alumina particles.

First embodiment:

When the diameter of the electrode assembly JR is 13 mm, the first length $(d_1)$ is 22 mm, and the third length $(d_3)$ is 1 mm, the minimum folding angle $(\theta_{min})$ was measured to be 36.0 degrees. By substituting the values for the minimum folding angle $(\theta_{min})$, the first length $(d_1)$, and the third length $(d_3)$ into the right-hand side of the formula, 16.984 mm may be derived as the upper boundary value for the second length ($d_2$).

Therefore, for the electrode assembly JR of the first embodiment, in order to prevent the coated portion of the electrode from being exposed even when the winding end corner ($S_c$) of the separator 60 is folded outward as much as possible, it is preferable that the fixing member 70 is attached to the winding end 60e of the separator 60 such that the end in the axial direction Y of the fixing member 70 is not separated by 16.9 mm or more from the end 60c in the axial direction Y of the separator 60, in consideration of the attachment tolerance of the fixing member 70.

Second embodiment:

When the diameter of the electrode assembly JR is 36 mm, the first length ($d_1$) is 22 mm, and the third length ($d_3$) is 1 mm, the minimum folding angle ($\theta_{min}$) was measured to be 27.1 degrees. By substituting the values for the minimum folding angle ($\theta_{min}$), the first length ($d_1$), and the third length ($d_3$) into the right-hand side of the formula, 12.258 mm may be derived as the upper boundary value for the second length ($d_2$).

Therefore, for the electrode assembly JR of the second embodiment, in order to prevent the coated portion of the electrode from being exposed even when the winding end corner ($S_c$) of the separator 60 is folded outward as much as possible, it is preferable that the fixing member 70 is attached to the winding end 60e of the separator 60 such that the end in the axial direction Y of the fixing member 70 is not separated by 12.2 mm or more from the end 60c in the axial direction Y of the separator 60, in consideration of the attachment tolerance of the fixing member 70.

Third embodiment:

When the diameter of the electrode assembly JR is 50 mm, the first length ($d_1$) is 22 mm, and the third length ($d_3$) is 1 mm, the minimum folding angle ($\theta_{min}$) was measured to be 23.4 degrees. By substituting the values for the minimum folding angle ($\theta_{min}$), the first length ($d_1$), and the third length ($d_3$) into the right-hand side of the formula, 10.520 mm may be derived as the upper boundary value for the second length ($d_2$).

Therefore, for the electrode assembly JR of the third embodiment, in order to prevent the coated portion of the electrode from being exposed even when the winding end corner ($S_c$) of the separator 60 is folded outward as much as possible, it is preferable that the fixing member 70 is attached to the winding end 60e of the separator 60 such that the end in the axial direction Y of the fixing member 70 is not separated by 10.5 mm or more from the end 60c in the axial direction Y of the separator 60, in consideration of the attachment tolerance of the fixing member 70.

Fourth embodiment:

When the diameter of the electrode assembly JR is 103 mm, the first length ($d_1$) is 22 mm, and the third length ($d_3$) is 1 mm, the minimum folding angle ($\theta_{min}$) was measured to be 18.6 degrees. By substituting the values for the minimum folding angle ($\theta_{min}$), the first length ($d_1$), and the third length ($d_3$) into the right-hand side of the formula, 8.404 mm may be derived as the upper boundary value for the second length ($d_2$).

Therefore, for the electrode assembly JR of the fourth embodiment, in order to prevent the coated portion of the electrode from being exposed even when the winding end corner ($S_c$) of the separator 60 is folded outward as much as possible, it is preferable that the fixing member 70 is attached to the winding end 60e of the separator 60 such that the end in the axial direction Y of the fixing member 70 is not separated by 8.4 mm or more from the end 60c in the axial direction Y of the separator 60, in consideration of the attachment tolerance of the fixing member 70.

The first to fourth embodiments as above support that the minimum folding angle ($\theta_{min}$) decreases as the diameter of the electrode assembly JR increases.

When the diameter of the electrode assembly JR is d, the relationship between d and the minimum folding angle ($\theta_{min}$) may be approximately expressed by the following exponential function.

$$\theta_{min} = \theta_{min,0} + A * e^{(R0)*d}$$

(Here, $\theta_{min,0}$ is 17.14399, A is 27.49876, and R0 is -0.02886.)

The constants $\theta_{min,0}$, A and R0 of the exponential function may be determined through function fitting using the data on the diameter (d) and the minimum folding angle ($\theta_{min}$) of the electrode assembly JR according to the first to fourth embodiments: (13 mm, 36 degrees), (36 mm, 27.1 degrees), (50 mm, 23.4 degrees) and (103 mm, 18.6 degrees).

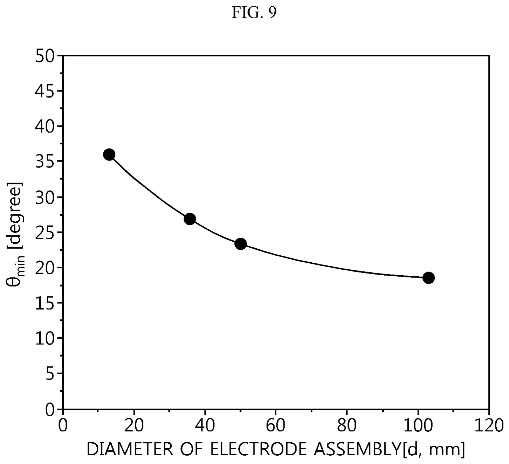

FIG. 9 is a graph of an exponential function obtained through function fitting according to an embodiment of the present disclosure. In FIG. 9, the diameter (d) and the minimum folding angle ($\theta_{min}$) of the electrode assembly JR according to the first to fourth embodiments are indicated by dots. Referring to FIG. 9, it may be found that the exponential function approximately well represents the unique change pattern of the minimum folding angle ($\theta_{min}$) according to the diameter (d) of the electrode assembly JR.

It is obvious to those skilled in the art that the constants $\theta_{min,0}$, A and R0 of the exponential function may vary depending on the first length ($d_1$) and the third length ($d_3$).

The exponential function may be used to estimate the minimum folding angle ($\theta_{min}$) for the electrode assemblies JR having different diameters from those of the electrode assemblies JR of the first to fourth embodiments.

As an example, when the diameter of the electrode assembly JR is 17 mm, the first length ($d_1$) is 22 mm, and the third length ($d_3$) is 1 mm, the minimum folding angle ($\theta_{min}$) of the winding end corner ($S_c$) of the separator 60 may be approximately determined as 33.980 degrees using the exponential function. In addition, by substituting the values for the first length ($d_1$), the third length ($d_3$), and the minimum folding angle ($\theta_{min}$) into the right-hand side of the formula, the upper boundary value of the second length ($d_2$) may be determined as 15.828 mm.

Therefore, for the electrode assembly JR with a diameter of 17 mm, in order to prevent the coated portion of the electrode from being exposed even when the winding end corner ($S_c$) of the separator 60 is folded outward as much as possible, it is preferable that the fixing member 70 is attached to the winding end 60e of the separator 60 such that the end in the axial direction Y of the fixing member 70 is not separated by 15.8 mm or more from the end 60c in the axial direction Y of the separator 60, in consideration of the attachment tolerance of the fixing member 70.

As another example, when the diameter of the electrode assembly JR is 20 mm, the first length ($d_1$) is 22 mm, and the third length ($d_3$) is 1 mm, the minimum folding angle ($\theta_{min}$) of the winding end corner ($S_c$) of the separator 60 may be approximately determined as 32.584 degrees using the exponential function. In addition, by substituting the values for the first length ($d_1$), the third length ($d_3$), and the minimum folding angle ($\theta_{min}$) into the right-hand side of the formula, the upper boundary value of the second length ($d_2$) may be determined as 15.061 mm.

Therefore, for the electrode assembly JR with a diameter of 20 mm, in order to prevent the coated portion of the electrode from being exposed even when the winding end corner ($S_c$) of the separator 60 is folded outward as much as possible, it is preferable that the fixing member 70 is attached to the winding end 60e of the separator 60 such that the end in the axial direction Y of the fixing member 70 is not separated by 15.0 mm or more from the end 60c in the axial direction Y of the separator 60, in consideration of the attachment tolerance of the fixing member 70.

As still another example, when the diameter of the electrode assembly JR is 45 mm, the first length ($d_1$) is 22 mm, and the third length ($d_3$) is 1 mm, the minimum folding angle ($\theta_{min}$) of the winding end corner ($S_c$) of the separator 60 may be approximately determined as 24.648 degrees using the exponential function. In addition, by substituting the values for the first length ($d_1$), the third length ($d_3$), and the minimum folding angle ($\theta_{min}$) into the right-hand side of the formula, the upper boundary value of the second length ($d_2$) may be determined as 11.095 mm.

Therefore, for the electrode assembly JR with a diameter of 45 mm, in order to prevent the coated portion of the electrode from being exposed even when the winding end corner ($S_c$) of the separator 60 is folded outward as much as possible, it is preferable that the fixing member 70 is attached to the winding end 60e of the separator 60 such that the end in the axial direction Y of the fixing member 70 is not separated by 11.0 mm or more from the end 60c in the axial direction Y of the separator 60, in consideration of the attachment tolerance of the fixing member 70.

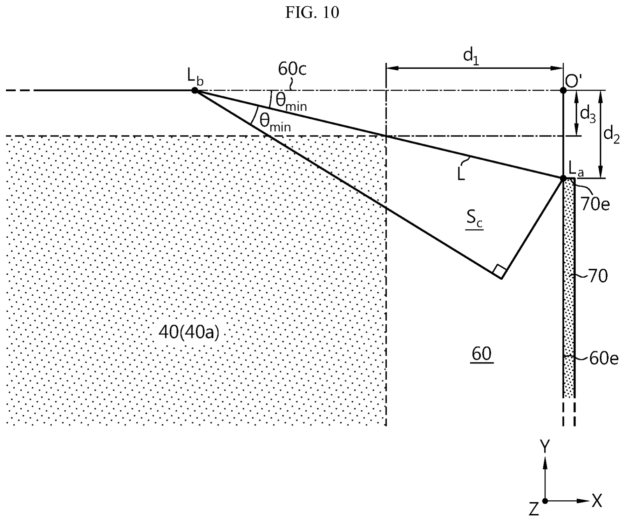

FIG. 10 is a plan view showing the relative positions of the coated portion 40a of the first electrode 40, the separator 60, and the fixing member 70 when the fixing member 70 is attached so that the second length ($d_2$) satisfies the above formula according to an embodiment of the present disclosure.

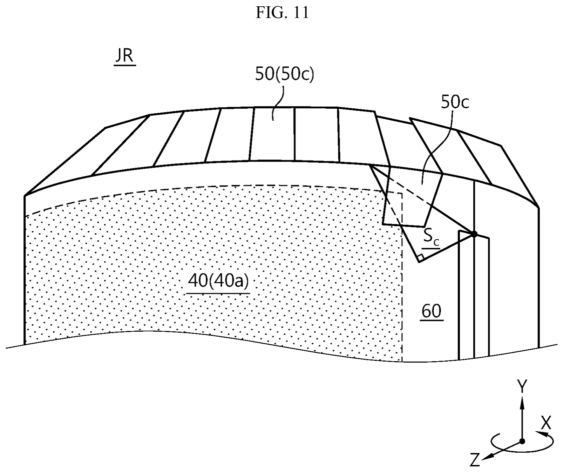

FIG. 11 is a partial perspective view of the electrode assembly JR showing that when the fixing member 70 is attached so that the second length ($d_2$) satisfies the above formula according to an embodiment of the present disclosure, the segment 50c of the second electrode 50 is prevented from coming into contact with the coated portion 40a of the first electrode 40 even when folded outward.

Referring to FIGS. 10 and 11, when designing the attachment position of the fixing member 70 according to an embodiment of the present disclosure, during the process of manufacturing the electrode assembly JR and the process of handling the electrode assembly JR for assembling the cylindrical battery, even if the winding end corner ($S_c$) of the separator 60 is folded as much as possible with the end 70e in the axial direction Y of the fixing member 70 acting as a folding bias point, the coated portion 40a of the first electrode 40, which is located at the outermost side, may be prevented from being exposed to the outside. Accordingly, even if the segment 50c of the second electrode 50 near the winding end corner ($S_c$) of the separator 60 is folded outward and comes into contact with the outer circumference of the electrode assembly JR, the coated portion 40a of the first electrode 40 and the folded segment 50c of the second electrode 50 may be fundamentally prevented from coming into contact. In addition, it is possible to prevent active material particles from being detached from the coated portion 40a of the first electrode 40. This may prevent short circuits from occurring inside the cylindrical battery and reduce the risk of low voltage.

Meanwhile, the above-described embodiment may be substantially equally applied not only to the upper portion of the electrode assembly JR, but also to the lower portion of the electrode assembly JR in which the plurality of segments 40c included in the uncoated portion 40a of the first electrode 40 are exposed to the outside of the separator 60.

In addition, when the coated portion 50a of the second electrode 50 is arranged closer to the outer circumference of the electrode assembly JR rather than the coated portion 40a of the first electrode 40, the above-described embodiment may be substantially equally applied to the end in the axial direction Y of the coated portion 50a of the second electrode 50.

In addition, when the above-described embodiment is applied to the upper or lower portion of the electrode assembly JR in which a plurality of segments are exposed to the outside of the separator 60, if an insulating coating layer is formed at the boundary between the coated portion and the uncoated portion, the third length ($d_3$) may be a length measured based on the end of the coated portion exposed to the outside, i.e., the boundary line between the coated portion and the insulating coating layer.

The above-described embodiment may also be applied to a case where the uncoated portions of the first electrode and the second electrode are not divided into segments. In such an application example, even if the winding end corner ($S_c$) of the separator 60 is folded as much as possible with the end 70e in the axial direction Y of the fixing member 70 acting as a folding bias point, the coated portion of the electrode arranged at the outermost side of the electrode assembly JR may be prevented from being exposed to the outside and coming into contact with a portion having the opposite polarity.

In the present disclosure, the positive electrode active material coated on the positive electrode and the negative electrode active material coated on the negative electrode may be used without limitation as long as they are active materials known in the art.

In one example, the positive electrode active material may include an alkali metal compound expressed by a general formula $A[A_xM_y]O_{2+z}$ (A includes at least one element among Li, Na and K; M includes at least one element selected from Ni, Co, Mn, Ca, Mg, Al, Ti, Si, Fe, Mo, V, Zr, Zn, Cu, Mo, Sc, Zr, Ru, and Cr; $x \geq 0$, $1 \leq x+y \leq 2$, $-0.1 \leq z \leq 2$; and the stoichiometric coefficients x, y, z and M are selected so that the compound maintains electrical neutrality).

In another example, the positive electrode active material may be an alkali metal compound $xLiM^1O_2\text{-}(1\text{-}x)$ $Li_2M^2O_3$ disclosed in US6,677,082, US6,680,143, et al., wherein $M^1$ includes at least one element having an average oxidation state 3; $M^2$ includes at least one element having an average oxidation state 4; and $0 \leq x \leq 1$).

In still another example, the positive electrode active material may be lithium metal phosphate expressed by a general formula $Li_aM^1{}_xFe_{1\text{-}x}M^2{}_yP_{1\text{-}y}M^3{}_zO_{4\text{-}z}$ ($M^1$ includes at least one element selected from Ti, Si, Mn, Co, Fe, V, Cr, Mo, Ni, Nd, Mg, and Al; $M^2$ includes at least one element selected from Ti, Si, Mn, Co, Fe, Cr, Mo, Ni, Nd, Al, Mg, As, Sb, Si, Ge, V, and S; $M^3$ includes a halogen element optionally including F; $0 < a \leq 2$, $0 \leq x \leq 1$, $0 \leq y < 1$, $0 \leq z < 1$; the stoichiometric coefficient a, x, y, and z are selected so that the compound maintains electrical neutrality), or $Li_3M_2(PO_4)_3$ [M includes at least one element selected from Ti, Si, Mn, Fe, Co, V, Cr, Mo, Ni, Mg, and Al].

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as $TiO_2$ and $SnO_2$ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. The particles constituting the coating layer may have a structure coupled with a binder so that interstitial volumes exist among adjacent particles.

The electrode assembly JR according to an embodiment of the present disclosure may be applied to a jelly-roll type cylindrical battery.

The cylindrical battery may be, for example, a cylindrical battery whose form factor ratio (defined as a value obtained by dividing the diameter of the cylindrical battery by height, namely a ratio of diameter ($\Phi$) to height H) is greater than about 0.4. Here, the form factor means a value indicating the diameter and height of a cylindrical battery.

The cylindrical battery may have a diameter of 35 mm or more, preferably 40 mm to 50 mm. The cylindrical battery may have a height of 70 mm or more, preferably, 75 mm to 90 mm. The cylindrical battery according to an embodiment of the present disclosure may be, for example, 46110 battery, 4875 battery, 48110 battery, 4880 battery, or 4680 battery. In the numerical value representing the form factor, first two numbers indicate the diameter of the battery, and the remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collecting plate to the bending surface area of the uncoated portion, it is necessary to sufficiently increase the number of stacked layers of the uncoated portion in the bending surface area in order to sufficiently secure the welding strength and lower the resistance. This requirement may be achieved by the electrode and the electrode assembly according to the embodiments (modifications) of the present disclosure.

A battery according to an embodiment of the present disclosure may be an approximately cylindrical battery, whose diameter is approximately 46 mm, height is approximately 110 mm, and form factor ratio is 0.418.

A battery according to another embodiment may be an approximately cylindrical battery, whose diameter is about 48 mm, height is about 75 mm, and form factor ratio is 0.640.

A battery according to still another embodiment may be an approximately cylindrical battery, whose diameter is approximately 48 mm, height is approximately 110 mm, and form factor ratio is 0.436.

A battery according to still another embodiment may be an approximately cylindrical battery, whose diameter is approximately 48 mm, height is approximately 80 mm, and form factor ratio is 0.600.

A battery according to still another embodiment may be an approximately cylindrical battery, whose diameter is approximately 46 mm, height is approximately 80 mm, and form factor ratio is 0.575.

It is obvious to those skilled in the art that the form factor ratio, diameter, and height of the cylindrical battery in an embodiment of the present disclosure are not limited to the above.

Hereinafter, the cylindrical battery according to an embodiment of the present disclosure will be described in detail.

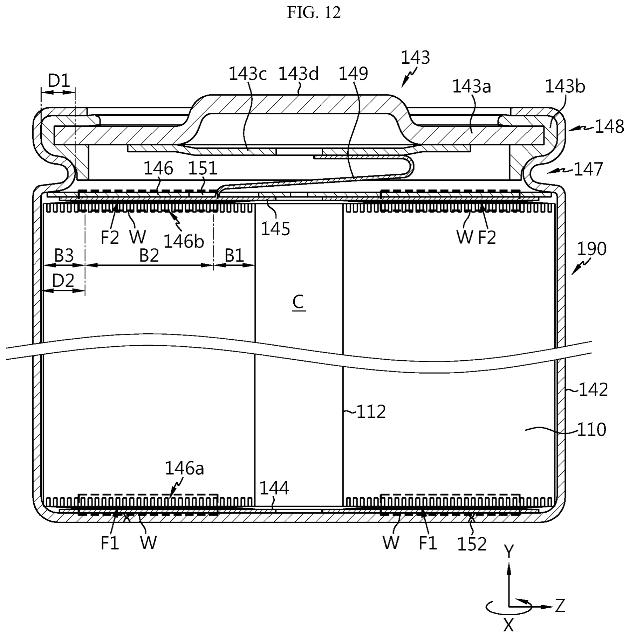

FIG. 12 is a cross-sectional view showing a cylindrical battery 190 according to an embodiment of the present disclosure, taken along the winding axis direction Y.

Referring to FIG. 12, the cylindrical battery 190 according to an embodiment of the present disclosure includes an electrode assembly 110 having a first electrode 40, a separator 60 and a second electrode 50, a battery housing 142 for accommodating the electrode assembly 110, and a sealing body 143 for sealing an open end of the battery housing 142.

The battery housing 142 is a cylindrical container with an opening at the top. The battery housing 142 is made of a conductive metal material. The battery housing 142 accommodates the electrode assembly 110 in the inner space through the top opening.

The electrode assembly 110 may have a jelly-roll shape. The electrode assembly 110 may be manufactured by sequentially stacking the outer separator 60b, the first electrode 40, the inner separator 60a, and the second electrode 50 at least once, and winding the stack around one axis, as illustrated in FIG. 6.

The first electrode 40 may be a negative electrode and the second electrode 50 may be a positive electrode, or vice versa.

The electrode assembly 110 may include first and second bending surface areas F1, F2 on the upper and lower portions. The first current collecting plate 144 may be welded to the first bending surface area F1 of the first uncoated portion 146a, and the second current collecting plate 145 may be welded to the second bending surface area F2 of the second uncoated portion 146b.

The first uncoated portion 146a is provided on the first electrode 40 and may include a plurality of segments 40c. The second uncoated portion 146b is provided on the second electrode 50 and may include a plurality of segments 50c.

The first uncoated portion 146a and the second uncoated portion 146b do not include a segment near the core. Therefore, the core 112 of the electrode assembly 110 is not closed by the first and second bending surface areas F1 and F2. Therefore, there is no difficulty in the electrolyte injection process, and the welding process between the first current collecting plate 144 and the battery housing 142 may be easily performed by inserting a welding jig through the core 112.

The sealing body 143 may include a cap plate 143a, a first gasket 143b for providing airtightness between the cap plate 143a and the battery housing 142 and having insulation, and a connection plate 143c electrically and mechanically coupled to the cap plate 143a.

The cap plate 143a is a component made of a conductive metal material, and covers the top open end of the battery housing 142. The cap plate 143a is electrically connected to the second bending surface area F2 of the second electrode 50, and is electrically insulated from the battery housing 142 by means of the first gasket 143b. Accordingly, the cap plate 143a may function as a positive electrode terminal of the cylindrical battery 190.

The cap plate 143a is placed on the beading portion 147 formed on the battery housing 142, and is fixed by a crimping portion 148. Between the cap plate 143a and the crimping portion 148, the first gasket 143b may be interposed to secure the airtightness of the battery housing 142 and the electrical insulation between the battery housing 142 and the cap plate 143a. The cap plate 143a may have a protrusion 143d protruding upward from the center thereof.

The battery housing 142 is electrically connected to the first bending surface area F1 of the first electrode 40. Therefore, the battery housing 142 may have negative polarity, identical to the first electrode 40.

The battery housing 142 includes the beading portion 147 and the crimping portion 148 at the top thereof. The beading portion 147 is formed by pressing inward the periphery of the outer circumferential surface of the battery housing 142. The beading portion 147 prevents the electrode assembly 110 accommodated inside the battery housing 142 from escaping through the top opening of the battery housing 142, and may function as a support portion on which the sealing body 143 is placed.

The second uncoated portion 146b of the second electrode 40 does not include a segment near the outer circumference of the electrode assembly 110. Therefore, when the battery housing 142 is inwardly pressed from the outside to form the beading portion 147, the upper end of the outer circumference of the electrode assembly 110 may be prevented from being deformed.

The crimping portion 148 is formed on the beading portion 147. The crimping portion 148 has an extended and bent shape to cover the outer circumference of the cap plate 143a disposed on the beading portion 147 and a part of the upper surface of the cap plate 143a.

The cylindrical battery 190 may further include a first current collecting plate 144 and/or a second current collecting plate 145 and/or an insulator 146.

The first current collecting plate 144 is made of a conductive metal material and may be coupled to the lower surface of the electrode assembly 110. One surface of the first current collecting plate 144 may be coupled to the first bending surface area F1 of the first electrode 40 by welding, and the opposite surface may be coupled to the inner bottom surface of the battery housing 142 by welding.

The first current collecting plate 144 may be omitted. In this case, the first bending surface area F1 may be welded to the bottom surface of the battery housing 142.

The second current collecting plate 145 is made of a conductive metal material and is coupled to the upper portion of the electrode assembly 110. The second current collecting plate 145 is coupled to the second bending surface area F2 of the second electrode 50 by welding. A lead 149 may be connected to the second current collecting plate 145. The lead 149 may extend upwardly from the electrode assembly 110 and be coupled to the connection plate 143c, or may be directly coupled to the lower surface of the cap plate 143a.

The second current collecting plate 145 may be integrally formed with the lead 149. In this case, the lead 149 may have an elongated plate shape extending outward from near the center of the second current collecting plate 145.

The insulator 146 is made of a polymer resin with insulation and may cover the second current collecting plate 145. The insulator 146 may cover the second current collecting plate 145 at the upper surface of the second current collecting plate 145, thereby preventing direct contact between the second current collecting plate 145 and the inner circumference of the battery housing 142.

The insulator 146 has a lead hole 151 so that the lead 149 extending upward from the second current collecting plate 145 may be withdrawn therethrough. The lead 149 is drawn upward through the lead hole 151 and coupled to the lower surface of the connection plate 143c or the lower surface of the cap plate 143a.

A peripheral region of the edge of the insulator 146 may be interposed between the second current collecting plate 145 and the beading portion 147 to fix the coupled body of the electrode assembly 110 and the second current collecting plate 145. Accordingly, the movement of the coupled body of the electrode assembly 110 and the second current collecting plate 145 may be restricted in the height direction Y of the battery 190, thereby improving the assembly stability of the battery 190.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area. Accordingly, when an abnormality occurs in the cylindrical battery 190 and the internal pressure increases to a predetermined level or more, the venting portion 152 may be ruptured so that the gas generated inside the battery housing 142 is discharged to the outside.

The venting portion 152 may be formed continuously or discontinuously while drawing a circle at the lower surface of the battery housing 142. In one modification, the venting portion 152 may be formed in a straight pattern or other patterns.

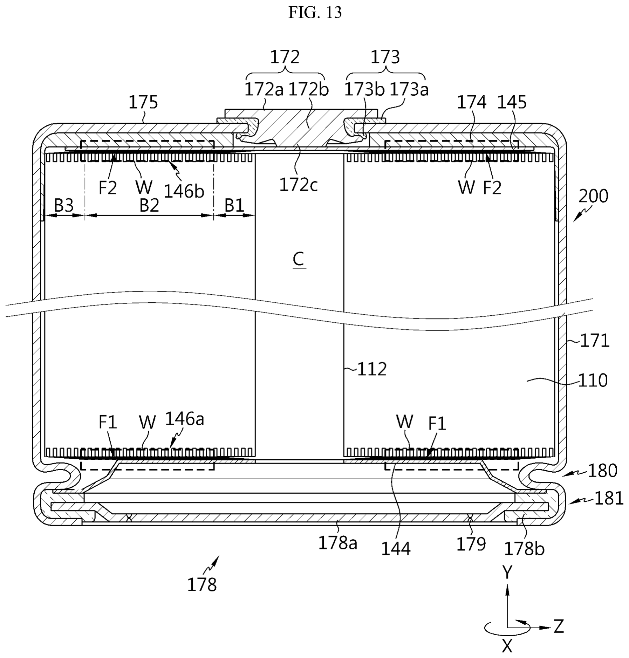

FIG. 13 is a cross-sectional view showing a cylindrical battery 200 according to an embodiment of the present disclosure, taken along the winding axis direction Y.

Referring to FIG. 13, the structure of the electrode assembly of the cylindrical battery 200 is substantially the same as that of the cylindrical battery 190 in FIG. 12, and the other structure except for the electrode assembly is changed.

Specifically, the cylindrical battery 200 includes a battery housing 171 through which a rivet terminal 172 is installed. The rivet terminal 172 is installed through a perforation hole formed in the closed end of the battery housing 171. The rivet terminal 172 is riveted to the perforation hole of the battery housing 171 in a state where a second gasket 173 made of an insulating material is interposed therebetween. The rivet terminal 172 is exposed to the outside in a direction opposite to the direction of gravity.

The rivet terminal 172 includes a terminal exposing portion 172a and a terminal insert portion 172b. The terminal exposing portion 172a is exposed to the outside of the closed surface of the battery housing 171. The terminal exposing portion 172a may be located approximately at a central portion of the closed end of the battery housing 171. The maximum diameter of the terminal exposing portion 172a may be larger than the maximum diameter of the perforation hole formed in the battery housing 171. The terminal insert portion 172b may be electrically connected to the uncoated portion 146b of the second electrode 50 through approximately the central portion of the closed end of the battery housing 171. The lower edge of the terminal insert portion 172b may be riveted onto the inner surface of the battery housing 171. That is, the lower edge of the terminal insert portion 172b may have a shape curved toward the inner surface of the battery housing 171. A flat portion 172c is included at the inner side of the lower edge of the terminal insert portion 172b. The maximum diameter of the lower portion of the riveted terminal insert portion 172b may be larger than the maximum diameter of the perforation hole of the battery housing 171.

The flat portion 172c of the terminal insert portion 172b may be welded to the center portion of the second current collecting plate 145 coupled to the second bending surface area F2 of the second electrode 50.

An insulator 174 made of an insulating material may be interposed between the second current collecting plate 145 and the inner surface of the battery housing 171. The insulator 174 covers the upper portion of the second current collecting plate 145 and the top edge of the electrode assembly 110. Accordingly, it is possible to prevent the uncoated portion 146b of the second electrode 50 of the electrode assembly 110 from contacting the inner surface of the battery housing 171 having a different polarity to cause a short circuit.

The thickness of the insulator 174 corresponds to or is slightly greater than the distance between the upper surface of the second current collecting plate 145 and the inner surface of the closed end of the battery housing 171. Accordingly, the insulator 174 may contact the upper surface of the second current collecting plate 145 and the inner surface of the closed end of the battery housing 171.

The terminal insert portion 172b of the rivet terminal 172 may be welded to the second current collecting plate 145 through the perforation hole of the insulator 174. A diameter of the perforation hole formed in the insulator 174 may be larger than a diameter of the riveting portion at the lower end of the terminal insert portion 172b. Preferably, the perforation hole may expose the lower portion of the terminal insert portion 172b and the second gasket 173.

The second gasket 173 is interposed between the battery housing 171 and the rivet terminal 172 to prevent the battery housing 171 and the rivet terminal 172 having opposite polarities from electrically contacting each other. Accordingly, the upper surface of the battery housing 171 having an approximately flat shape may function as a negative electrode terminal of the cylindrical battery 200.

The second gasket 173 includes a gasket exposing portion 173a and a gasket insert portion 173b. The gasket exposing portion 173a is interposed between the terminal exposing portion 172a of the rivet terminal 172 and the battery housing 171. The gasket insert portion 173b is interposed between the terminal insert portion 172b of the rivet terminal 172 and the battery housing 171. The gasket insert portion 173b may be deformed together when the terminal insert portion 172b is riveted, so as to be in close contact with the inner surface of the battery housing 171. The second gasket 173 may be made of, for example, a polymer resin having insulation property.

The gasket exposing portion 173a of the second gasket 173 may have an extended shape to cover the outer circumference of the terminal exposing portion 172a of the rivet terminal 172. When the second gasket 173 covers the outer circumference of the rivet terminal 172, it is possible to prevent a short circuit from occurring while an electrical connection part such as a bus bar is coupled to the upper surface of the battery housing 171 and/or the rivet terminal 172. Although not shown in the drawings, the gasket exposing portion 173a may have an extended shape to cover not only the outer circumference surface of the terminal exposing portion 172a but also a part of the upper surface thereof.

When the second gasket 173 is made of a polymer resin, the second gasket 173 may be coupled to the battery housing 171 and the rivet terminal 172 by thermal fusion. In this case, airtightness at the coupling interface between the second gasket 173 and the rivet terminal 172 and at the coupling interface between the second gasket 173 and the battery housing 171 may be enhanced. Meanwhile, when the gasket exposing portion 173a of the second gasket 173 has a shape extending to the upper surface of the terminal exposing portion 172a, the rivet terminal 172 may be integrally coupled with the second gasket 173 by insert injection molding.

In the upper surface of the battery housing 171, a remaining area 175 other than the area occupied by the rivet terminal 172 and the second gasket 173 corresponds to the negative electrode terminal having a polarity opposite to that of the rivet terminal 172.

The first current collecting plate 144 is electrically connected to the first bending surface area F1 of the first electrode 40 through welding at the lower portion of the electrode assembly 110.

Preferably, the first current collecting plate 144 is electrically connected to the battery housing 171. To this end, at least a part of the edge of the first current collecting plate 144 may be interposed and fixed between the inner surface of the battery housing 171 and a first gasket 178b. In one example, at least a part of the edge of the first current collecting plate 144 may be fixed to the beading portion 180 by welding in a state of being supported on the lower surface of the beading portion 180 formed at the bottom of the battery housing 171. In one modification, at least a part of the edge of the first current collecting plate 144 may be directly welded to the inner wall surface of the battery housing 171.

A sealing body 178 for sealing the lower open end of the battery housing 171 includes a cap plate 178a and a first gasket 178b. The first gasket 178b electrically separates the cap plate 178a and the battery housing 171. A crimping portion 181 fixes the edge of the cap plate 178a and the first gasket 178b together. The cap plate 178a has a venting portion 179. The configuration of the venting portion 179 is substantially the same as in the embodiment shown in FIG. 12. The lower surface of the cap plate 178a may be located above the lower end of the crimping portion 181. In this case, a space is formed under the cap plate 178a to smoothly perform venting. In particular, it is useful when the cylindrical battery 200 is installed so that the crimping portion 181 faces the direction of gravity.

Preferably, the cap plate 178a is made of a conductive metal material. However, since the first gasket 178b is interposed between the cap plate 178a and the battery housing 171, the cap plate 178a may not have electrical polarity. The sealing body 178 seals the open end of the lower portion of the battery housing 171 and mainly functions to discharge gas when the internal pressure of the battery 200 increases over a critical value.

In a modified example, the edge of the cap plate 178a may be directly coupled to the open end of the battery housing 171 by welding. In this case, the beading portion 180 and the crimping portion 181 may be omitted, and the sidewall of the battery housing 171 may be extended linearly to the open end. In addition, at least a part of the edge of the first current collecting plate 144 may be coupled to the cap plate 178a. In one example, the edge of the cap plate 178a, the open end of the battery housing 171, and the edge of the first current collecting plate 144 may be coupled by welding. In another example, at least a part of the edge of the first current collecting plate 144 may be directly welded to an inner wall surface of the battery housing 171. In another example, the first current collecting plate 144 may be omitted, and a partial area of the cap plate 178a facing the first bending surface area F1 may be directly welded to the first bending surface area F1, and the edge of the cap plate 178a may be welded to the open end of the battery housing 171. A partial area of the cap plate 178a may be the inner side of the edge.

Preferably, the rivet terminal 172 electrically connected to the second bending surface area F2 of the second electrode 50 is used as the positive electrode terminal. In addition, in the upper surface of the battery housing 171 electrically connected to the first bending surface area F1 of the first electrode 40 through the first current collecting plate 144, a part 175 except for the rivet terminal 172 is used as the negative electrode terminal. If two electrode terminals are located at the upper portion of the cylindrical battery 200 as above, it is possible to arrange electrical connection components such as bus bars at only one side of the cylindrical battery 200. This may bring about simplification of the battery pack structure and improvement of energy density. In addition, since the part 175 used as the negative electrode terminal has an approximately flat shape, a sufficient connection area may be secured for connecting electrical connection components such as bus bars. Accordingly, the cylindrical battery 200 may reduce the resistance at the connection portion of the electrical connection components to a desirable level.

The cylindrical battery described above may be used to manufacture a battery pack.

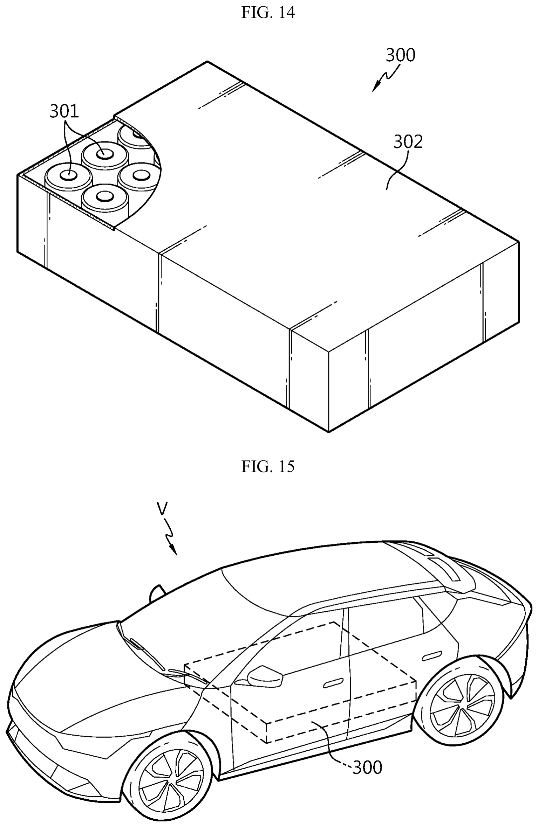

FIG. 14 is a diagram schematically showing a battery pack according to an embodiment of the present disclosure.

Referring to FIG. 14, a battery pack 300 according to an embodiment of the present disclosure includes an aggregate in which cylindrical batteries 301 are electrically connected, and a pack housing 302 for accommodating the aggregate. The cylindrical battery 301 may be any one of the batteries according to the above embodiments. In the drawing, components such as a bus bar for electrical connection of the cylindrical batteries 301, a cooling unit, and an external terminal are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 15 is a diagram schematically showing a vehicle including the battery pack 300 of FIG. 14.

Referring to FIG. 15, a vehicle V according to an embodiment of the present disclosure includes the battery pack 300 according to an embodiment of the present disclosure. The vehicle V operates by receiving power from the battery pack 300 according to an embodiment of the present disclosure.

According to the present disclosure, by optimally designing the attachment position of the fixing member using the distance between the winding end of the separator and the winding end of the outermost coated portion in the winding direction, the distance between the end of the separator and the end of the outermost coated portion in the axial direction of the electrode assembly, and the minimum folding angle of the winding end corner of the separator, it is possible to fundamentally prevent the outermost coated portion from being exposed even when the winding end corner of the separator is folded outward as much as possible with the end of the fixing member acting as a folding bias point.

According to another aspect of the present disclosure, by optimally designing the attachment position of the fixing member, the distance between the winding end of the separator and the winding end of the outermost coated portion in the winding direction may be reduced compared to the prior art, thereby reducing the amount of the separator used during the winding process of the electrode assembly.

According to still another aspect of the present disclosure, it is possible to provide a cylindrical battery having improved safety, and a battery pack and a vehicle including the same by fundamentally preventing exposure of the outermost coated portion that otherwise might occur while handling the electrode assembly during assembling the cylindrical battery.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**Claims**

1. An electrode assembly in which a first electrode and a second electrode having a short side and a long side and including a coated portion and an uncoated portion along a long side direction, and a separator interposed therebetween are wound around one axis to define a core and an outer circumference,

   wherein an outermost coated portion of the electrode assembly is the coated portion of the first electrode,
   wherein a winding end of the separator extends from a winding end of the coated portion of the first electrode by a first length along a winding direction,
   wherein a fixing member is attached to the winding end of the separator along an axial direction from a point spaced apart from an axial end of the separator by a second length,
   wherein an axial end of the coated portion of the first electrode is spaced inwardly from the axial end of the separator by a third length, and
   wherein when a winding end corner of the separator is folded as much as possible with an axial end of the fixing member acting as a folding bias point so that an outer surface of the winding end corner faces the outer circumference, a winding end corner of the coated portion of the first electrode is not exposed to an outside.

2. The electrode assembly according to claim 1,
   wherein a fold line generated when the winding end corner of the separator is folded does not overlap with the winding end corner of the coated portion of the first electrode.

3. The electrode assembly according to claim 2,

   wherein when the winding end corner of the separator is folded outward as much as possible using an arbitrary point of the winding end of the separator as a folding bias point, a surface portion corresponding to a portion exposed to the outside is approximated as a right triangle and a minimum value of an angle formed by one side of the right triangle along the winding direction and the fold line is defined as a minimum folding angle ($\theta_{min}$), and
   wherein the fixing member is attached to the winding end of the separator so that a second length corresponding to a distance between the axial end of the fixing member and the axial end of the separator satisfies a following formula:

$$\text{second length} < \text{third length} + \text{first length}*\tan(\theta_{min}).$$

4. The electrode assembly according to claim 3,
   wherein the minimum folding angle ($\theta_{min}$) decreases as a diameter of the electrode assembly increases.

5. The electrode assembly according to claim 4,
   wherein the minimum folding angle ($\theta_{min}$) decreases exponentially as the diameter of the electrode assembly increases.

6. The electrode assembly according to claim 3,
   wherein a length of one side of the right triangle along the winding direction is longer than a length of the other side of the right triangle along the axial direction.

7. The electrode assembly according to claim 3,

   wherein a diameter of the electrode assembly is 13 mm to 103 mm, and
   wherein the minimum folding angle ($\theta_{min}$) is 5 degrees to 60 degrees.

8. The electrode assembly according to claim 3,
   wherein the first length is 1 mm to 120 mm.

9. The electrode assembly according to claim 3,
   wherein the third length is 0.1 mm to 3.0 mm.

10. The electrode assembly according to claim 1,

wherein the separator includes an inner separator interposed between the first electrode and the second electrode, and an outer separator arranged at an outer side of the first electrode and winding a stack of the first electrode, the inner separator, and the second electrode, and

wherein a separator extending from the winding end of the coated portion of the first electrode by the first length along the winding direction is the outer separator.

11. The electrode assembly according to claim 1,

wherein the uncoated portion of the first electrode includes a plurality of segments divided by a cut groove formed along the winding direction,

wherein the plurality of segments of the first electrode protrude outwardly from the axial end of the separator along a direction away from the axial end of the coated portion of the first electrode, and

wherein the plurality of segments of the first electrode are bent toward the core to form a first bending surface area.

12. The electrode assembly according to claim 10,

wherein the uncoated portion of the second electrode includes a plurality of segments divided by a cut groove formed along the winding direction,

wherein the plurality of segments of the second electrode protrude outwardly from the axial end of the separator adjacent to the axial end of the coated portion of the first electrode, and

wherein the plurality of segments of the second electrode are bent toward the core to form a second bending surface area.

13. A cylindrical battery comprising:

the electrode assembly according to any one of claims 1 to 12;

a battery housing having an open end and a closed end and configured to accommodate the electrode assembly through the open end, the battery housing being electrically connected to the first electrode of the electrode assembly;

a sealing body configured to seal the open end of the battery housing; and

a terminal electrically connected to the second electrode of the electrode assembly and having a surface exposed to an outside of the battery housing.

14. The cylindrical battery according to claim 13, further comprising:
a first current collecting plate configured to electrically connect the uncoated portion of the first electrode and the battery housing.

15. The cylindrical battery according to claim 14,

wherein the sealing body includes a cap plate configured to cover the open end of the battery housing, and a gasket interposed between an edge of the cap plate and the open end, and

wherein an edge of the first current collecting plate is interposed between the gasket and a sidewall of the battery housing.

16. The cylindrical battery according to claim 15,

wherein the battery housing includes a beading portion formed by pressing inward an outer circumference near the open end, and

wherein an edge of the first current collecting plate is in contact with the beading portion.

17. The cylindrical battery according to claim 13,

wherein the terminal is installed in a perforation hole formed in the closed end of the battery housing to be insulated from the battery housing,

wherein the terminal includes a terminal exposing portion exposed through an outer surface of the closed end, and a terminal insert portion extending from the terminal exposing portion and inserted into the battery housing through the perforation hole, and

wherein a lower edge of the terminal insert portion is riveted toward an inner surface of the closed end.

18. The cylindrical battery according to claim 17, further comprising:
a second current collecting plate configured to electrically connect the uncoated portion of the second electrode and a lower end of the terminal insert portion.

19. The cylindrical battery according to claim 13,

wherein the sealing body includes a cap plate that seals the open end of the battery housing, and

wherein the terminal is the cap plate.

20. The cylindrical battery according to claim 13,

wherein the sealing body includes a cap plate that covers the open end of the battery housing,

wherein an edge of the cap plate is coupled to the open end, and

wherein at least a part of the first current collecting plate is coupled to the cap plate.

21. The cylindrical battery according to claim 13,

wherein the sealing body includes a cap plate configured to cover the open end of the battery housing,

wherein an edge of the cap plate is coupled to the open end of the battery housing, and

wherein at least a part of an inner side of the edge of the cap plate is electrically connected to the electrode assembly.

22. A battery pack comprising a plurality of cylindrical batteries according to any one of claims 13 to 21.

23. A vehicle comprising the battery pack according to claim 22.

FIG. 1

FIG. 2

FIG. 3

30

33

10a

A

11a

31

Y

Z X

FIG. 4

FIG. 5

FIG. 6

FIG. 7

FIG. 8

FIG. 9

FIG. 10

FIG. 11

FIG. 12

FIG. 13

FIG. 14

FIG. 15

## INTERNATIONAL SEARCH REPORT

| International application No. |
| --- |
| **PCT/KR2024/012226** |

**A. CLASSIFICATION OF SUBJECT MATTER**

**H01M 10/04**(2006.01)i; **H01M 50/538**(2021.01)i; **H01M 50/188**(2021.01)i; **H01M 50/167**(2021.01)i; **H01M 50/567**(2021.01)i; **H01M 50/213**(2021.01)i; **H01M 50/249**(2021.01)i

According to International Patent Classification (IPC) or to both national classification and IPC

**B. FIELDS SEARCHED**

Minimum documentation searched (classification system followed by classification symbols)

H01M 10/04(2006.01); H01M 10/052(2010.01); H01M 10/0583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 최외곽(outermost part), 전극(electrode), 고정 (fix), 접다(fold)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2016-0076233 A (LG CHEM, LTD.) 30 June 2016 (2016-06-30)<br>See paragraphs [0068]-[0073] and figures 1-4. | 1-23 |
| A | KR 10-2010-0124196 A (SAMSUNG SDI CO., LTD.) 26 November 2010 (2010-11-26)<br>See paragraph [0043]. | 1-23 |
| A | KR 10-1002487 B1 (SAMSUNG SDI CO., LTD.) 17 December 2010 (2010-12-17)<br>See claim 1 and figures 1-4. | 1-23 |
| A | KR 10-2019-0026595 A (SUMITOMO CHEMICAL CO., LTD.) 13 March 2019 (2019-03-13)<br>See claim 1 and figure 1. | 1-23 |
| A | CN 116581393 A (LILIAN XINGGUANG TECHNOLOGY (SHENYANG) CO., LTD.) 11 August 2023 (2023-08-11)<br>See claim 1 and figures 1-4. | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 November 2024** | **18 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012226**

| Patent document cited in search report | | | Publication date (day/month/year) | Patent family member(s) | | | Publication date (day/month/year) |
|---|---|---|---|---|---|---|---|
| KR | 10-2016-0076233 | A | 30 June 2016 | KR | 10-1763576 | B1 | 01 August 2017 |
| KR | 10-2010-0124196 | A | 26 November 2010 | CN | 101894966 | A | 24 November 2010 |
| | | | | CN | 101894966 | B | 26 February 2014 |
| | | | | EP | 2254187 | A1 | 24 November 2010 |
| | | | | EP | 2254187 | B1 | 22 January 2014 |
| | | | | JP | 2011-124198 | A | 23 June 2011 |
| | | | | JP | 5172869 | B2 | 27 March 2013 |
| | | | | US | 2010-0291432 | A1 | 18 November 2010 |
| | | | | US | 8288036 | B2 | 16 October 2012 |
| KR | 10-1002487 | B1 | 17 December 2010 | KR | 10-2009-0132802 | A | 31 December 2009 |
| | | | | US | 2009-0317701 | A1 | 24 December 2009 |
| | | | | US | 8535822 | B2 | 17 September 2013 |
| KR | 10-2019-0026595 | A | 13 March 2019 | CN | 109428109 | A | 05 March 2019 |
| | | | | CN | 109428109 | B | 04 July 2023 |
| | | | | JP | 2019-046798 | A | 22 March 2019 |
| | | | | JP | 6654673 | B2 | 26 February 2020 |
| | | | | US | 2019-0074551 | A1 | 07 March 2019 |
| CN | 116581393 | A | 11 August 2023 | None | | | |

Form PCT/ISA/210 (patent family annex) (July 2022)

**REFERENCES CITED IN THE DESCRIPTION**

**Patent documents cited in the description**

- KR 1020230108388
- KR 1020240108559
- US 6677082 B
- US 6680143 B